Europäisches Patentamt

European Patent Office

Office européen des brevets

(11) Publication number: **0 076 677**
**B1**

# EUROPEAN PATENT SPECIFICATION

(45) Date of publication of patent specification: **22.01.86**

(21) Application number: **82305255.0**

(22) Date of filing: **04.10.82**

(51) Int. Cl.⁴: **C 03 C 13/06,** C 03 B 37/01,
C 04 B 14/46

(54) **Glass fibre reinforced cementitious products.**

(30) Priority: **07.10.81 GB 8130299**

(43) Date of publication of application:
**13.04.83 Bulletin 83/15**

(45) Publication of the grant of the patent:
**22.01.86 Bulletin 86/04**

(84) Designated Contracting States:
**AT BE CH DE FR GB IT LI LU NL SE**

(56) References cited:
**GB-A- 790 397**
**US-A-1 842 772**

(73) Proprietor: **Bishop Building Materials Limited**
**21 Fleeceline Road**
**Toronto Ontario M8V 2K4 (CA)**

(72) Inventor: **Rogers, Donald L.**
**90 Merrill Avenue, E**
**Toronto Ontario M4C 1C7 (CA)**
Inventor: **Haslam, Douglas F.**
**1526 Bunsden Avenue**
**Mississauga Ontario (CA)**

(74) Representative: **Coxon, Philip et al**
**Eric Potter & Clarkson 14 Oxford Street**
**Nottingham NG1 5BP (GB)**

**The file contains technical information**
**submitted after the application was filed and**
**not included in this specification**

Courier Press, Leamington Spa, England.

**Description**

This invention relates to a mineral fibre composition in the form of filaments or fibres for incorporation as reinforcement into cementitious materials such as cement, mortar or concrete.

This use of reinforcement in concrete to improve the strength of concrete structures is well known. For example, structural steel members, steel rods and steel mesh are commonly used to improve the strength and impact resistance of concrete structures used in buildings, bridges, light standards and the like. Asbestos fibres have also been commonly used to reinforce cementitious materials as a replacement for steel reinforcing to reduce the weight of the reinforced structures by incorporating 15—20 weight percent of fibrous asbestos minerals such as chrysotile in a cement matrix. However, asbestos reinforcement is expensive, is no longer desirable because of suspected health hazards, referred to in U.S. Patent 4,153,439 and provides low impact strength with moderate flexural strength.

The use of hollow glass spheres, foamed glass or glass fibres produced from slags and the like silicate materials have been used but found generally unsuitable for long term reinforcement of concrete or cementitious products because of general instability in the alkaline environment of hydrating cements. For example, Portland cement attacks and substantially weakens glass fibers precluding long term reinforcement of cementitious products.

United States Patent 4,002,482 issued January 11, 1977 sets forth a number of techniques which have been attempted in order to overcome this situation. For example, the high pH of the cementitious material has been reduced by the use of atmospheric carbon dioxide or by the introduction of carbon dioxide into compacted concrete. This technique has proved too complicated. It has been proposed to coat glass fibres with an alkali-resistant synthetic resin. Adhesion characteristics of coated glass fibres relative to the cement matrix were not satisfactory. A proposal to use highly alkali-resistant glass fibres or spheres did not eliminate the corrosion of the glass, and poor adhesion of the glass to a cementitious matrix occurred. Patent 4,002,482 discloses a fibre composite in which a number of metallic oxides are present in a predetermined ratio to produce a glass suitable for long term reinforcing use. Patent No. 2,051,279 discloses the production of rock wool from pyroxenes for uniform chemical composition and colour.

United States Patent 3,408,213 issued October 29, 1968 discloses another embodiment of glass composition suitable for glass fibre manufacture in which the composition contains a number of metal oxides including boron, sodium, calcium and magnesium oxides in predetermined quantities. The production of these glass fibres is expensive.

Canadian Patents 1,018,705; 1,058,459; 1,066,966; and 1,087,773 disclose various coating compositions for glass fibres to reduce their rate of deterioration when incorporated in cementitious materials. Glass fibres treated are continuously drawn fibres preferably having a chemical composition including 5 mole % $ZrO_2$ for enhanced alkali resistance.

In GB—A—790,397 there is described a method of producing mineral fibre comprising forming a melt having the composition of, for example, CaO 25.9 wt %, MgO 18.6 wt % and $SiO_2$ 55.5 wt % disintegrating the melt by a blowing process to form fibres and collecting the fibres.

We have found that a mineral fibre having a composition within the range by weight of about 15 to 20% MgO, about 20 to 30% CaO, and the balance $SiO_2$, when combined with a cementitious matrix material such as cement, mortar or concrete, form a cementitious product which surprisingly provides enhanced and along term reinforcement of said cementitious products.

It is commonly believed that mineral fibres suitable for use as a reinforcement in matrix materials must be produced by drawing techniques to attain optimum tensile strength characteristics. It has been found that mineral fibres produced from starting materials having the above composition by relatively inexpensive atomizing fiberization have good tensile strength characteristics.

More particularly, we have found that the naturally-occurring mineral diopside ($CaO.MgO.2SiO_2$), alone or in combination with mineral sources of CaO, MgO and $SiO_2$ such as dolomiate and sandstone, unexpectedly is particularly suited for the production of mineral fibres having high tensile strength characteristics by the use of atomizing techniques and can be readily incorporated with cementitious materials to provide a reinforcing and alkali-resistant dispersion in the cementitious matrix.

Accordingly, the present invention is directed to a cementitious product reinforced by mineral fibres and to the method of producing the mineral fibres, said mineral fibres produced from a starting material having a composition within the range by weight of about 15 to 20% MgO, about 20 to 30% CaO, and the balance $SiO_2$. The starting material preferably is diopside alone or diopside in combination with up to about 10% by weight dolomite and/or up to about 20% by weight of a $SiO_2$-bearing material such as sandstone or quartz.

To enhance bending strength and fracture toughness of fibre-reinforced cementitious products, it is preferred to add a coating composition to the fibres. The addition of a thin coating of hydrophobic material to the fibres before incorporation into the matrix material is believed to increase the strength and toughness of the reinforced product by affecting stress transfer at the fibre-matrix interface such that the fibres are subject to a measure of pull-out from the matrix and by enhancing the alkaline resistance of the fibres.

The method and product of the invention will now be described with reference to mineral fibres produced from diopside rock mined in Wakefield, Quebec, having a typical chemical composition of:

2

**0 076 677**

| | |
|---|---|
| $SiO_2$ | 54.7% |
| CaO | 25.5% |
| MgO | 18.6% |
| $Na_2O$ | 0.14% |
| $K_2O$ | 0.03% |
| $Fe_2O_3$ | 0.13% |
| $Al_2O_3$ | 0.6% |
| $TiO_2$ | 0.09% |
| L.O.I. | 0.3% |

Crushed diopside rock was fed alone or combined with sandstone at a ratio of about 10:1 or with dolomite at a ratio of about 5:1 for continuous melting in a coke-fired shaft furnace at a temperature in the range of about 1425°C to 1490°C, preferably at a temperature in the range of about 1425—1450°C.

The sandsone had the following composition:

| | |
|---|---|
| $SiO_2$ | 98—99% |
| $Al_2O_3$ | 0.1% |
| Fe | 0.05—0.1% |
| Carbonates | Bal. |

The dolomite had the following composition:

| | |
|---|---|
| CaO | 30% |
| MgO | 20.4% |
| $SiO_2$ | 3% |
| Fe | 0.4% |
| L.O.I.$(CO_2)$ | Bal. |

The melt was fiberized by impinging the molten stream onto rapidly rotating cylinders and atomizing with high pressure air or steam such that the melt stream was broken into small droplets with long tails. The tails, having lengths up to seven inches (17,8 cm) if desired, is the wool or fibre component which was collected with the droplet or "shot" on a moving wire belt to form a blanket. Unacceptable shot was separated from the fibre by passage between granulators comprising opposed, rotating spiked cylinders and the fibres separated from this unacceptable shot at rotating screens.

Example 1

Slag fibres and diopside fibres produced according to the above process were tested for alkaline resistance in accordance with A.S.T.M. Standards for Concrete and Mineral Aggregates, specifically the 1981 Annual Book, Part 14, C-289-81, entitled Standard Test Method for Potential Reactivity of Aggregates (Chemical Method), pages 193—210.

The average value of Sc (concentration of $SiO_2$, millimoles/liter) for slag fibres was an undesirably high 1391, regardless of the value of Rc (reduction in alkalinity, millimoles/liter). The average Sc value for diopside fibres was consistently a small negative number. The respective average values, as weight losses, were:

| | |
|---|---|
| Slag fibres | 4.2% |
| Diopside fibres | Nil |

It is thus evident that the diopside fibres had much greater resistance to an alkaline solution than the slag fibres.

3

Example 2

A set of comparative tests were carried out to show reactivity of E-glass fibres (borosilicate glass fibre), Cem Fil (trade mark of alkali-resistant coated synthetic glass), conventional slag fibres, diopside fibres, diopside-dolomite fibres and diopside-sandstone fibres in alkaline solutions simulated to provide such effects as encountered in hydrating cement. A number of 1 g samples of each material were dispersed in 100 mL of 1N NaOH solution and stirred occasionally at 100°C for 1½ hours, filtered and washed, and the residue dried at 110°C. The average percent weight losses were as follows:

| | |
|---|---|
| E-glass fibres | 1.39 |
| Cem Fil fibres (A) | 0.50 |
| (B) | 0.46 |
| Slag fibres | 0.86 |
| Diopside fibres | 0.57 |
| Diopside-sandstone fibres | 0.68 |
| Diopside-dolomite fibres | 0.49 |

The diopside fibres and fibres provided by combinations of diopside fibres with sandstone or dolomite had weight losses in the same range as Cem Fil Fibres which is commercially used as a cement reinforcement material.

Example 3

Comparative tests were conducted on an unreinforced control cement, a cement reinforced with diopside fibres, and a cement reinforced with diopside fibres coated with a hydrophobic compound to evaluate bending strength and fracture toughness.

Cement samples were prepared by dispersing the uncoated and coated diopside fibres in cementitious slurries which had the following compositions:

Slurry composition

| Material | Control | Diopside (coated and uncoated) |
|---|---|---|
| Triton N-57 (trademark) (g) surfactant | 0.7 | 0.7 |
| Calcite (g) | 66.5 | 66.5 |
| Cement (g) | 94.5 | 94.5 |
| Water (g) | 140.0 | 140.0 |
| Diopside Fibres (g) | | 30 |
| Total weight (g) | 301.7 | 331.7 |

The prepared fibre cement slurries were filtered on a Buchner Funnel. The cakes approximately 9—14 mm thick and 12 cm in diameter were removed from the funnel, placed under polyethylene sheet for 24 hours, and then cured in water for 3 days and air dried for 14 days. The central point bending test, span 85 mm, was used to determine the ultimate bending strength. The fracture toughness was measured as an area under the load deflection curve normalized by the cross-sectional area of the specimens.

The results of bending strength and fracture toughness are summarized in the following table.

Bending strength and fracture toughness

| Material | Bending strength (MPa) | Fracture toughness (J/m$^2$) |
|---|---|---|
| Control (no reinforcement) | 4.00 ± 0.85 (n=6) | 11.42 ± 4.38 (n=6) |
| Diopside-uncoated | 5.42 ± 0.76 (n=10) | 92.17 ± 18.59 (n=5) |
| Diopside-coated | 7.54 ± 0.76 (n=10) | 115.50 ± 29.42 (n=5) |

4

The inclusion of fibres in the cementitious product according to the present invention, coated and uncoated, provided an increase in bending strength and a substantial increase in fracture toughness.

The fibres provide long term reinforcement of cementitious materials due to the resistance of the fibres to an alkaline environment and the relative cheaper cost and freedom from health hazards of the fibres renders the diopside fibres a viable alternative as a reinforcement material.

## Claims

1. A method of producing an alkali-resistant mineral fibre for use as a reinforcement in cementitious products characterised by forming a melt having a composition within the range by weight of about 20 to 30% CaO, about 15 to 20% MgO and the balance $SiO_2$, at a temperature of about 1425°C to 1490°C, atomizing the melt with high pressure air or steam to form fibres, and cooling the fibres for collection.

2. A method as claimed in Claim 1 characterised in that the melt is formed from the mineral diopside alone or diopside with at least one of dolomite, sandstone and quartz.

3. A method as claimed in Claim 2 characterised in that the melt is formed from diopside and up to 20% by weight sandstone or quartz.

4. A method as claimed in Claim 2 characterised in that the melt is formed from diopside and sandstone having a ratio of diopside to sandstone of up to 10:1.

5. A method as claimed in Claim 2 characterised in that the melt is formed from diopside and up to 10% by weight dolomite.

6. A method as claimed in Claim 2 characterised in that the melt is formed from diopside and dolomite having a ratio of diopside to dolomite of up to 5:1.

7. A method as claimed in Claim 1 characterised in that the melt has the composition of about 25% CaO, about 19% MgO and the balance $SiO_2$.

8 A method as claimed in any preceding claim characterised in that the melt is formed at a temperature of about 1425°C to 1450°C.

9. A cementitious product formed from fibres made according to the method as claimed in Claim 1, 2 or 3 characterised in that the fibres are dispersed in a cementitious matrix material.

10. A cementitious product formed from fibres made according to the method as claimed in Claim 4, 5 or 6 characterised in that the fibres are dispersed in a cementitious matrix material.

11. A cementitious product reinforced by mineral fibres characterised in that said mineral fibres have the composition of about 15 to 20% MgO, about 20 to 30% CaO and the balance $SiO_2$.

12. A cementitious product as claimed in Claim 11 characterised in that the fibres are formed from the mineral diopside.

13. A cementitious product as claimed in Claim 11 characterized in that the fibres are formed from the mineral diopside alone or with at least one of dolomite, sandstone and quartz.

14. A cementitious product as claimed in Claim 13 characterized in that the fibres are formed from diopside and up to 20% by weight sandstone or quartz.

15. A cementitious product as claimed in Claim 11 characterised in that the fibres are formed from diopside and dolomite with a ratio of diopside to dolomite of up to about 5:1.

16. A cementitious product as claimed in Claim 13 characterised in that the fibres are formed from diopside and up to 10% by weight dolomite.

17. A cementitious product as claimed in Claim 13 characterised in that the fibres are formed from diopside and sandstone with a ratio of diopside to sandstone or quartz of up to about 10:1.

18. A cementitious product as claimed in Claim 12 characterised in that the fibres are formed by melting the mineral diopside in a furnace at a temperature in the range of about 1425°C to 1450°C, and atomizing the diopside melt with high pressure air or steam to form fibres.

## Patentansprüche

1. Verfahren zur Herstellung einer alkali-restistenten Mineralfaser zur Verstärkung zementartiger Produkte, dadurch gekennzeichnet, daß eine Schmelze hergestellt wird, deren Zusammensetzung in Gewichtsprozenten aus etwa 20—30% CaO, etwa 15—20% MgO und dem Rest $SiO_2$ besteht und wobei eine Temperatur von etwa 1.425°C—1.490°C aufrechterhalten und die Schmelze mit Druckluft- oder Dampf zerstäubt wird, um Fasern zu erzeugen, die dann abgekühlt und gesammelt werden.

2. Verfahren nach Anspruch 1, dadurch gekennzeichnet, daß die Schmelze entweder nur aus dem Mineral Diopsid oder aus Diopsid und mindestens Dolomit, Sandstein oder Quarz besteht.

3. Verfahren nach Anspruch 2, dadurch gekennzeichnet, daß die Schmelze aus Diopsid und bis zu 20 Gewichtsprozent Sandstein oder Quarz besteht.

4. Verfahren nach Anspruch 2, dadurch gekennzeichnet, daß die Schmelze aus Diopsid oder Sandstein besteht, wobei das Verhältnis von Diopsid zu Sandstein bis zu 10:1 beträgt.

5. Verfahren nach Anspruch 2, dadurch gekennzeichnet, daß die Schmelze aus Diopsid und bis zu 10 Gewichtprozent Dolomit besteht.

6. Verfahren nach Anspruch 2, dadurch gekennzeichnet, daß die Schmelze aus Diopsid und Dolomit besteht, wobei das Verhältnis von Diopsid zu Dolomit bis zu 5:1 beträgt.

5

# 0 076 677

7. Verfahren nach Anspruch 1, dadurch gekennzeichnet, daß die Schmelze eine Zusammensetzung von etwa 25% CaO, etwa 19% MgO und einen Rest SiO$_2$ aufweist.

8. Verfahren nach einem der vorangehenden Ansprüche, dadurch gekennzeichnet, daß die Schmelze bei einer Temperatur von etwa 1.425°C—1.450°C gebildet wird.

9. Ein zementartiges Produkt aus Fasern, die nach dem Verfahren der Ansprüche 1, 2 und 3 hergestellt wurden, dadurch gekennzeichnet, daß die Fasern in einer zementartigen Masse verteilt sind.

10. Ein zementartiges Produkt aus Fasern, die nach dem Verfahren der Ansprüche 4, 5 und 6 hergestellt wurden, dadurch gekennzeichnet, daß die Fasern in einer zementartigen Masse verteilt sind.

11. Ein zementartiges, mit Mineralfasern verstärktes Produkt, dadurch gekennzeichnet, daß die Mineralfaser eine Zusammensetzung von etwa 15—20 % MgO, etwa 20—30% CaO und einem Rest SiO$_2$ aufweist.

12. Ein zementartiges Produkt nach Anspruch 11, dadurch gekennzeichnet, daß die Fasern aus dem Mineral Dioxid gebildet sind.

13. Ein zementartiges Produkt nach Anspruch 11, dadurch gekennzeichnet, daß die Schmelze entweder nur aus dem Mineral Diopsid oder aus Diopsid und mindestens Dolomit, Sandstein oder Quarz besteht.

14. Ein zementartiges Produkt nach Anspruch 13, dadurch gekennzeichnet, daß die Schmelze aus Diopsid und bis zu 20 Gewichtsprozent Sandstein oder Quarz besteht.

15. Ein zementartiges Produkt nach Anspruch 11, dadurch gekennzeichnet, daß die Schmelze aus Diopsid oder Sandstein besteht, wobei das Verhältnis von Diopsid zu Sandstein bis zu 5:1 beträgt.

16. Zementartiges Produkt nach Anspruch 13, dadurch gekennzeichnet, daß die Schmelze aus Diopsid und bis zu 10 Gewichtprozent Dolomit besteht.

17. Zementartiges Produkt nach Anspruch 13, dadurch gekennzeichnet, daß die Schmelze aus Diopsid und Dolomit besteht, wobei das Verhältnis von Diopsid zum Dolomit bis zu 10:1 beträgt.

18. Zementartiges Produkt nach Anspruch 12, dadurch gekennzeichnet, daß die Fasern durch Schmelzen des Minerals Diopsid in einem Ofen bei einer Temperatur von etwa 1.425°C—1.450°C und durch Zerstäuben der Diopsidschmelze mit Druckluft oder Dampf zur Erzeugung von Fasern hergestellt werden.

## Revendications

1. Procédé de fabrication d'une fibre minérale résistante aux alcalins pour être utilisée comme renfort dans des produits cimentiers, caractérisé par le fait de former une masse fondue ayant une composition pondérale se situant entre environ 20 et 30 % CaO, environ 15 à 20 % MgO et le reste SiO$_2$, à une température d'environ 1425°C à 1490°C, d'atomiser la masse fondue avec de l'air ou de la vapeur à haute pression pour former des fibres, et de refroidir les fibres pour les recueillir.

2. Procédé selon la revendication 1, caractérisé en ce que la masse fondue est formée à partir du minéral diopside seul ou de diopside avec au moins un des minéraux suivants: dolomie, grès et quartz.

3. Procédé selon la revendication 2, caractérisé en ce que la masse fondue est formée de diopside avec jusqu'à 20 % en poids de grès ou de quartz.

4. Procédé selon la revendication 2, caractérisé en ce que la masse fondue est formée de diopside et de grès dans une proportion entre diopside et grès allant jusqu'à 10/1.

5. Procédé selon la revendication 2, caractérisé en ce que la masse fondue est formée de diopside avec jusqu'à 10 % en poids de dolomie.

6. Procédé selon la revendication 2, caractérisé en ce que la masse fondue est formée de diopside et de dolomie dans une proportion entre diopside et dolomie allant jusquà 5/1.

7. Procédé selon·la revendication 1, caractérisé en ce que la masse fondue a une composition d'environ 25 % CaO, environ 19˙ % MgO, et le reste SiO$_2$.

8. Procédé selon l'une quelconque des revendications précédentes, caractérisé en ce que la masse fondue est formée à une température d'environ 1425°C à 1450°C.

9. Produit cimentier formé avec des fibres fabriquées selon le procédé tel que revendiqué dans les revendications 1, 2 ou 3, caractérisé en ce que les fibres sont dispersées dans un matériau cimentier formant matrice.

10. Produit cimentier formé avec des fibres fabriquées selon le procédé tel que revendiqué dans les revendications 4, 5 ou 6, caractérisé en ce que les fibres sont dispersées dans un matériau cimentier formant matrice.

11. Produit cimentier renforcé de fibres minérales, caractérisé en ce que lesdites fibres minérales ont une composition d'environ 15 à 20 % MgO, environ 20 à 30 % CaO et le reste SiO$_2$.

12. Produit cimentier selon la revendication 11, caractérisé en ce que les fibres sont formées à partir du minéral diopside.

13. Produit cimentier selon la revendication 11, caractérisé en ce que les fibres sont formées du minéral diopside seul ou avec au moins un des suivants: dolomie, grès et quartz.

14. Produit cimentier selon la revendication 13, caractérisé en ce que les fibres sont formées de diopside avec jusqu'à 20 % en poids de grès ou de quartz.

15. Produit cimentier selon la revendication 11, caractérisé en ce que les fibres sont formées de diopside et de dolomie avec une proportion entre diopside et dolomie allant jusqu'à environ 5/1.

6

16. Produit cimentier selon la revendication 13, caractérisé en ce que les fibres sont formées de diopside et de jusqu'à 10 % en poids de dolomie.

17. Produit cimentier selon la revendication 13, caractérisé en ce que les fibres sont formées de diopside et de grès avec une proportion entre diopside et grès ou quartz allant jusqu'à environ 10/1.

18. Produit cimentier selon la revendication 12, caractérisé en ce que les fibres sont formées par fusion du minéral diopside dans un four à une température comprise entre environ 1425°C et 1450°C, et par atomisation de la diopside en fusion avec de l'air ou de la vapeur à haute pression pour former des fibres.